# EUROPEAN PATENT APPLICATION

(11) **EP 1 860 157 A1**
(43) Date of publication of application: **28.11.2007**
(21) Application number: 06715601.8
(22) Date of filing: 13.03.2006
(51) Int. Cl.: C09B 67/04, B01F 7/30, C09B 67/46, C09C 3/04, C09C 3/06, C09D 17/00, G02B 5/20

(54) **PROCESSED PIGMENT AND USE THEREOF**

(30) Priority: 14.03.2005 JP 2005070812
(71) Applicant: SAKATA INX CORPORATION, Osaka-shi, Osaka 550-0002 (JP)
(72) Inventor: ITOH, Kazunori, i-ku, Osaka-shi, Osaka, 5500002 (JP); HAYASHI, Akira, i-ku, Osaka-shi, Osaka, 5500002 (JP)
(74) Representative: Hart Davis, Jason
(86) International application number: PCT/JP2006/304878
(87) International publication number: WO 2006/098261

(57) **Abstract**

A purpose of the present invention is to provide a treated pigment usable in fields where the pigment is required to give high transparency and a high contrast ratio in the case where an organic pigment is used as the pigment by treating primary particles of the pigment and making the particles finer and more uniform and dispersing the particles.

The present invention provides a treated pigment obtained by grinding down a pigment by friction with an inorganic salt using a kneading apparatus having three agitation blades respectively made movable in an autorotation manner and simultaneously in a revolution manner.

## Description

### TECHNICAL FIELD

The present invention relates to a treated pigment and its use. More particularly, the present invention relates to a treated pigment to be used for not only various kind of printing inks and coating materials but also pigment-dispersed resist compositions for liquid crystal color filters, inks for ink jet, liquid developers and the like, particularly coloring compositions required to have transparency and a good contrast ratio. For its use, the present invention relates to a pigment-dispersed resist composition for a color filter having high transparency and a high contrast ratio.

### BACKGROUND ART

Recently, it has been begun to use organic pigments as coloring agents for not only various kinds of printing inks and coating materials but also color filters and inks for ink jet in fields which are required to have high transparency and a contrast ratio.
In these years, higher transparency and a higher contrast ratio have been required and to actually satisfy the requirements, it is needed to make particle diameter of organic pigments very fine.
As a method for making the particle diameter of organic pigments very fine are methods for making pigments very fine by using a conventional dispersing apparatus such as a three-roll mill, a sand mill, a ball mill, or the like.
The method mainly makes secondary particles of an organic pigment merely primary particles and thus is limited for making the primary particles further finer and obtaining high transparency.
To solve such a problem, the following method is proposed; that is, the method is for pulverizing an organic pigment by wetting a mixture of the organic pigment and a water-soluble inorganic salt such as common salt with a water-soluble organic solvent which is substantially incapable of dissolving water-soluble inorganic salt, strongly kneading the resulting mixture by a kneader or the like, successively removing the water-soluble inorganic salt and the water-soluble organic solvent by washing with water, and drying the remaining organic pigment (e.g., reference to Patent Document 1).
Although the method is possible to make the primary particles of the organic pigment further finer, it is difficult for the method to keep the particle diameter even and improvement of the transparency and contrast ratio is limited.
Patent Document 1: Japanese Kokai Publication No. Hei-08-179111

### SUMMARY OF THE INVENTION

A purpose of the present invention is to provide a treated pigment usable in fields where the pigment is required to give high transparency and a high contrast ratio in the case where an organic pigment is used as the pigment by treating primary particles of the pigment and making the particles finer and more uniform and dispersing the particles. Further, another purpose of the present invention is to provide a pigment-dispersed resist composition for a color filter giving further higher transparency and contrast ratio as compared with a conventional one.

Inventors of the present invention have made various investigations to satisfy the above-mentioned purposes and accordingly have found that the above-mentioned problems can be all solved by using a treated pigment obtained by kneading a mixture containing a pigment, an inorganic salt, a dispersion medium which does not substantially dissolve the inorganic salt with a three-shaft type vertical shaft kneading apparatus having three agitation blades movable in specified moving manners and successively removing the inorganic salt and the dispersion medium and the finding has now led to completion of the present invention.
That is, the present invention provides (1) a treated pigment obtained by grinding down a pigment by friction with an inorganic salt using a kneading apparatus having three agitation blades respectively made movable in an autorotation manner and simultaneously in a revolution manner.
Further, the present invention provides (2) a production method of a treated pigment comprising
loading a pigment, an inorganic salt, a dispersion medium substantially incapable of dissolving said inorganic salt into a tank,
kneading the mixture with a kneading apparatus having three agitation blades respectively made movable in an autorotation manner and simultaneously in a revolution manner, and successively
removing said inorganic salt and said dispersion medium substantially incapable of dissolving said inorganic salt.
Further, the present invention provides (3) the production method of a treated pigment as described in (2)
wherein the above-mentioned inorganic salt is a water-soluble inorganic salt and the above-mentioned dispersion medium is a water-soluble organic solvent and
the water-soluble inorganic salt and the water-soluble organic solvent are removed by washing with water after kneading treatment.
The present invention also provides (4) the production method of a treated pigment as described in (2) or (3)
wherein as the above-mentioned kneading apparatus is employed a vertical shaft type kneading apparatus composed by
installing a supporting cylinder in a agitation head, inserting an driving shaft into the supporting cylinder, fixing a rotation plate in the driving shaft, journaling three agitation blade shafts in the rotation plate while positioning them at the respective apexes of an equilateral triangle in a plane view and surrounding the above-mentioned driving shaft,
installing planetary gears at the tip ends of the agitation blade shafts,
engaging the planetary gears with sun gears supported by the supporting cylinder,
installing agitation blades each having a diameter close to the inner wall of the tank in one side and extended to the center of the tank in the other side and set in the lower ends of the respective agitation blade shafts, and
forming a column body in the center of the tank to which the above-mentioned agitation blades are moved adjacently.
The present invention also provides (5) a pigment dispersion composition containing the treated pigment described in (1), a pigment dispersant, and a dispersion medium.
The present invention also provides (6) a pigment-dispersed resist composition for a color filter containing the pigment dispersion composition as described in (5).

### DETAILED DESCRIPTION OF THE INVENTION

Hereinafter, the present invention will be described more in detail.
A treated pigment of the present invention is obtained by grinding down a pigment by friction with an inorganic salt using a kneading apparatus having three agitation blades respectively made movable in an autorotation manner and simultaneously in a revolution manner.
The present invention uses a treated pigment obtained by kneading a mixture containing a pigment, an inorganic salt and a dispersion medium which does not substantially dissolve the inorganic salt, particularly, a pigment, a water-soluble inorganic salt and a water-soluble organic solvent which does not substantially dissolve the water-soluble inorganic salt with a three-shaft type vertical shaft kneading apparatus having three agitation blades movable in specified moving manners and successively removing the water-soluble inorganic salt and the water-soluble organic solvent.
In the present invention, as the kneading apparatus is employed an apparatus having three agitation blades respectively made movable in an autorotation manner and simultaneously in a revolution manner (sun-and-planet motion), so that dead spaces among the agitation blades and between the agitation blades and the inner face of the apparatus can be remarkably narrowed and accordingly stronger and more even shearing force can be obtained. Due to the shearing force, the particle diameter of the pigment ground by the inorganic salt by friction is made finer and more even than that of the primary particle diameter and a pigment dispersion composition and a pigment-dispersed resist composition containing the treated pigment are provided with improved transparency and contrast ratio as compared with a conventional one in the case where an organic pigment is used as the pigment.

Next, a production method of the treated pigment of the present invention will be described.
To obtain the treated pigment of the present invention, the method for grinding a pigment by friction with an inorganic salt is called generally as a salt milling and a wet treatment method of loading the above-mentioned materials and further a dispersion medium which does not substantially dissolve an inorganic salt into a tank and kneading the mixture is usable. As the dispersion medium which does not substantially dissolve an inorganic salt may be employed conventional medium which a person skilled in the art has commonly used. Generally, a water-soluble inorganic salt and a water-soluble organic solvent which does not substantially dissolve a water-soluble inorganic salt are preferably usable for the inorganic salt and the dispersion medium.

Those usable as the pigment are conventionally known and employed inorganic pigments and organic pigments.
As the inorganic pigment is exemplified carbon black or the like.
Examples of the organic pigment include dye lake pigments, azo, benzimidazolone, phthalocyanine, quinacridone, anthraquinone, dioxazine, indigo, thioindigo, perylene, perinone, diketo-pyrrolo-pyrrole, isoindolinone, nitro, nitroso, anthraquinone, flavanthrone, quinophthalone, pyranthrone, and indathrone pigments.
Practical examples include, as red pigments, C.I. Pigment Red 9, 19, 38, 43, 88, 122, 123, 144, 149, 155, 166, 168, 177, 178, 179, 180, 188, 190, 202, 207, 208, 209, 216, 217, 220, 224, 226, 242, 254, and 264; as blue pigments, C.I. Pigment Blue 15, 15:1, 15:3, 15:4, 15:6, 16, 22, 29, 60, 64, and 80; as green pigments, C.I. Pigment Green 7, 10, 36 and 37, all brominated C.I. Pigment Green 36 (referred to as a chemical structure in which chlorine atoms and bromine atoms are bonded to the benzene ring of C.I. Pigment Green 36 and all of the chlorine atoms are substituted with bromine atoms); as yellow pigments, C.I. Pigment Yellow 17, 20, 24, 74, 81, 83, 93, 95, 97, 108, 109, 110, 117, 120, 123, 125, 128, 129, 137, 138, 139, 147, 150, 151, 153, 154, 155, 166, 168, 180, 181, 185, 191, and 214; as violet pigments, C.I. Pigment Violet 19, 23, 29, 30, 31, 37, 50, and 88; and as orange pigments, C.I. Pigment Orange 31, 38, 40, 43, 48, 61, 64, and 71.
As the inorganic salt, those that are water-soluble are preferable and common salt (sodium chloride), potassium chloride, and Glauber's salt may be exemplified and in terms of the hardness and the cost of the inorganic salt, common salt (sodium chloride) is preferable to be used. Further, sine the particle diameter of the pigment can be made finer and more even than the primary particle diameter, the particle diameter of the inorganic salt is preferably 200 µm or smaller and more preferably 50 µm or smaller.

Further, the water-soluble organic solvent, which does not substantially dissolve the inorganic salt and is to be used as the dispersion medium which does not substantially dissolve the inorganic salt, is not particularly limited if it satisfies the conditions that it is water-soluble and does not dissolve the inorganic salt, however since the temperature is increased and the solvent tends to be easily evaporated at the time of salt milling, high boiling point solvents with a boiling point of 120°C or higher are preferable from a viewpoint of safety.
Examples to be used as such a water-soluble organic solvent include alkoxyalcohols such as 2-methoxyethanol, 2-butoxyethanol, 2-(isopentyloxy)ethanol, 2-(hexyloxy)ethanol, 1-methoxy-2-propanol, and 1-ethoxy-2-propanol; glycols such as diethylene glycol, triethylene glycol, liquid polyethylene glycol, dipropylene glycol, and low molecular weight polypropylene glycol; and ethers such as diethylene glycol monomethyl ether, diethylene glycol monoethyl ether, diethylene glycol monobutyl ether, triethylene glycol monomethyl ether, dipropylene glycol monomethyl ether, and dipropylene glycol monoethyl ether.
For the materials to obtain the treated pigment of the present invention, based on the necessity, a pigment dispersant and a pigment derivative may be also used.

As the kneading apparatus for obtaining the treated pigment of the present invention is employed a kneading apparatus having three agitation blades respectively made movable in an autorotation manner and simultaneously in a revolution manner. As compared with a kneader used conventionally for salt milling, if the kneading apparatus having the above-mentioned characteristics is used, more even agitation force is added and accordingly, it is made possible to obtain particle diameter more even than the particle diameter of the pigment particles. In this connection, "movable in a revolution manner" means movement of the agitation blades revolving around in the tank and "the kneading apparatus having agitation blades made movable in a revolution manner" intrinsically means a kneading apparatus whose agitation blades themselves are moved and revolve around in the tank, however in the present invention, if the relative movement of the tank and the agitation blades is same (e.g. the tank is rotated), such a kneading apparatus is included as "the kneading apparatus having agitation blades made movable in a revolution manner".
Further, the structure of the kneading apparatus is preferable to satisfy the condition that a triangle formed by setting the crossing points of three autorotation axis as the apexes is an equilateral triangle in a plane at right angles to the autorotation axes of the three agitation blades and that the revolution axis crosses the gravity center of the equilateral triangle. Further, the agitation blades are preferable to have a length from the bottom part of the tank to the liquid surface in the tank and a width approximately from the inner wall of the tank to the center in the tank.

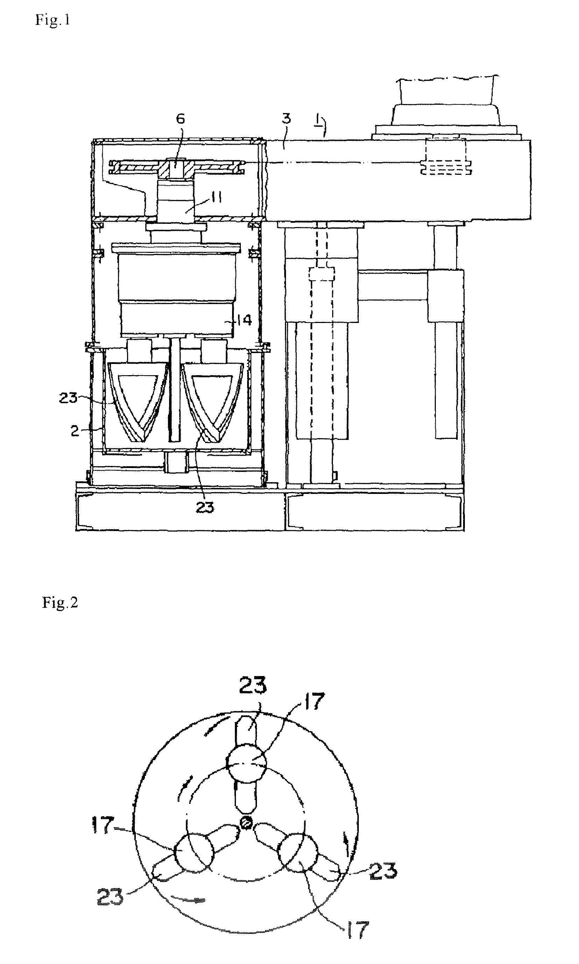

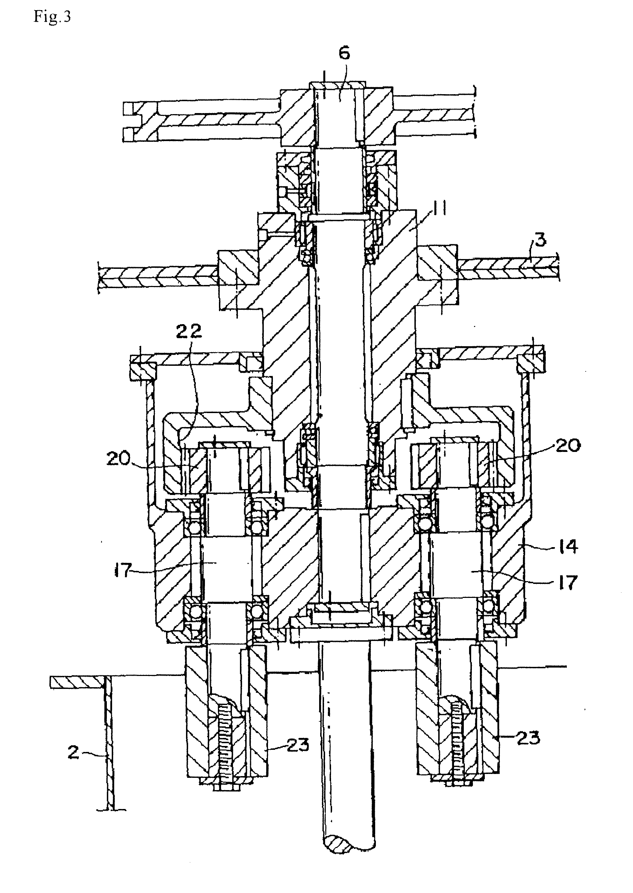

As such a kneading apparatus may be included Trimix (manufactured by INOUE MFG., INC.). Trimix is a vertical shaft type kneading apparatus 1 having a structure, as shown in Figs. 1 to 3, composed by installing a supporting cylinder 11 in a agitation head 3, inserting an driving shaft 6 into the supporting cylinder 11, fixing a rotation plate 14 in the driving shaft 6, journaling three agitation blade shafts 17 in the rotation plate 14 while positioning them at the respective apexes of an equilateral triangle in a plane view and surrounding the above-mentioned driving shaft 6, installing planetary gears 20 at the tip ends of the agitation blade shafts 17, engaging the planetary gears 20 with sun gears 22 supported by the supporting cylinder 11, installing agitation blades 23 of a column body each having a diameter close to the inner wall of the tank 2 in one side and extended to the center of the tank 2 in the other side and set in the lower ends of the respective agitation blade shafts 17. In the tank 2 in which the materials to be kneaded are loaded, the agitation blades 23 are moved while being close to the inner wall of the tank 2 in one sides and close to the center of the tank 2 in the other sides and simultaneously the agitation head 3 is turned around and the agitation blades 23 move in a revolution manner. The gaps among the three agitation blades 23 are designed to be narrow, so that better kneading result can be accomplished.

On the other hand, as the tank to be used, in relation to the autorotation movement and the revolution movement of the agitation blades of the kneading apparatus, those which have so complicated shapes are not preferable but those having cylindrical wall parts and flat bottom parts perpendicular to the inner walls are preferable.
As a method for producing the treated pigment of the present invention using the above-mentioned materials and apparatus may be employed a method involving loading the above-mentioned pigment, inorganic salt, and dispersion medium which does not substantially dissolve the inorganic salt into the tank, kneading the mixture by making the three agitation blades of the kneading apparatus respectively movable in an autorotation manner and simultaneously in a revolution manner for grinding the pigment with the inorganic salt by friction, adding hot water, filtering the resulting slurry, and removing the remaining inorganic salt and dispersion medium by washing with water. In the grinding treatment of the pigment, in order to sufficiently apply stress for kneading, the loading amount (viscosity) of the materials, the inner diameter of the tank, and the like are preferable to be adjusted properly and for example, in the case of carrying out the treatment using the above-mentioned Trimix, it is preferable to blend the materials in a manner that the load ampere is adjusted to be in a range of 50% to 85% of the rated electric current of the motor.

Next, a pigment dispersion composition of the present invention will be described.
The pigment dispersion composition of the present invention is obtained by dispersing the above-mentioned treated pigment in a dispersion medium using a pigment dispersant.
The pigment dispersant in the present invention may be those which are effective to disperse the above-mentioned treated pigment and conventionally known and employed dispersants may be used. Examples may be polyester polymer pigment dispersants, acrylic polymer pigment dispersants, polyurethane polymer pigment dispersants, pigment derivatives, cationic surfactants, nonionic surfactants, anionic surfactants, and carbodiimide pigment dispersants. These pigment dispersants may be properly selected in accordance with the type of the pigment and the dispersion medium to be used for pigment dispersion composition. Further, these pigment dispersants may be used alone or two or more kinds of the dispersants may be used in combination. The use amount of the treated pigment in the above-mentioned pigment dispersion composition is preferably in a range from 5 to 97% by mass in the entire solid matter in the pigment dispersion composition.
The use amount of the pigment dispersant is preferably 3 parts by mass or more and 100 parts by mass or less in 100 parts by mass of the treated pigment (total of the pigments used).

The dispersion medium added to the pigment dispersion composition the present invention may include organic dispersion media and water-soluble media. Examples of the organic dispersion media include (poly)alkylene glycol monoalkyl ethers such as ethylene glycol monomethyl ether, ethylene glycol monoethyl ether, diethylene glycol monomethyl ether, diethylene glycol monoethyl ether, propylene glycol monomethyl ether, and propylene glycol monoethyl ether; (poly) alkylene glycol monoalkyl ether acetate such as ethylene glycol monomethyl ether acetate, ethylene glycol monoethyl ether acetate, and propylene glycol monomethyl ether acetate; ethers such as diethylene glycol diethyl ether, diethylene glycol methyl ethyl ether, and tetrahydrofuran; ketones such as methyl ethyl ketone, methyl isobutyl ketone, cyclohexanone, 2-heptanone, and 3-heptanone; lactic acid alkyl esters such as methyl 2-hydroxypropionate and ethyl 2-hydroxypropionate; esters such as ethyl 2-hydroxy-2-methylpropionate, 3-methyl-3-methoxybutyl propionate, methyl 3-methoxypropionate, ethyl 3-ethoxypropionate, ethyl ethoxyacetate, ethyl hydroxyacetate, ethyl acetate, n-butyl acetate, isobutyl acetate, n-butyl propionate, methyl acetoacetate, n-amyl formate, and ethyl pyruvate; aromatic hydrocarbons such as toluene and xylene; amides such as N-methylpyrrolidone, N,N-dimethylformamide, and N,N-dimethylacetamide; and alcohols such as isopropyl alcohol and n-propyl alcohol. These organic dispersion media may be used alone or two or more of them in form of a mixture.
Further, the water-soluble medium may be solely water or in combination with a water-compatible organic dispersion medium.

The production method of the pigment dispersion composition of the present invention may be carried out by kneading a mixture containing the above-mentioned treated pigment, pigment dispersant, dispersion medium, and if necessary other additives by a roll mill, a kneader, a high speed stirring apparatus, a bead mill, a ball mill, a sand mill, a ultrasonic dispersing apparatus, a high pressure dispersing apparatus, or the like and dispersing the mixture to obtain the pigment dispersion composition, however the production method is one example of preferable embodiments of the present invention and accordingly the present invention should not be limited to the exemplified examples.

Finally, a pigment-dispersed resist composition for a color filter, which is one kind of uses of the treated pigment of the present invention, will be described.
The pigment-dispersed resist composition for a color filter of the present invention contains the above-mentioned pigment dispersion composition.
The pigment-dispersed resist composition for a color filter of the present invention is an alkali-developable resist composition having an active energy-curable property and mainly contains the treated pigment, a pigment dispersant, a film-formable resin, a photopolymerizable compound, a polymerization initiator, and a solvent and if necessary, may contain various kinds of additives such as a sensitizer, a photopolymerization inhibitor, or the like. The pigment-dispersed resist composition for a color filter of the present invention is obtained by adding, in accordance with the purpose, a film-formable resin, a photopolymerizable compound, a photopolymerization initiator, a solvent, various kinds of additives such as a sensitizer, and a photopolymerization inhibitor to the above-mentioned pigment dispersion composition.
The treated pigment to be used for the pigment-dispersed resist composition for a color filter are preferably used treated pigments of higher organic pigments to form a coating film having clear hue.
The use amount of the above-mentioned treated pigment is preferably 5 to 80% by mass in the entire solid matter in the pigment-dispersed resist composition.
The film-formable resin added to the pigment-dispersed resist composition of the present invention may be, for example, carboxyl group-containing alkali-soluble resins, which are copolymers obtained by reaction of carboxyl-containing unsaturated monomers such as acrylic acid, methacrylic acid, itaconic acid, maleic acid, maleic anhydride, maleic acid monoalkyl ester, citraconic acid, citraconic anhydride, and citraconic acid monoalkyl ester with at least one kind of compounds selected from a group consisting of styrene, 2-hydroxyethyl acrylate, 2-hydroxyethyl methacrylate, allyl acrylate, allyl methacrylate, benzyl acrylate, benzyl methacrylate, glycerol monoacrylate, glycerol methacrylate, N-phenylmaleimide, polystyrene macromonomer, and poly(methyl methacrylate) macromonomer and the copolymers may be used alone or two or more of them may be used in combination.

The photopolymerizable compound to be added to the pigment-dispersed resist composition of the present invention may be monomers and oligomers having photopolymerizable unsaturated bonds.
Practical examples, as a monomer having one photopolymerizable unsaturated bond in a molecule, include alkyl methacrylate or acrylate such as methyl methacrylate, butyl methacrylate, 2-ethylhexyl methacrylate, methyl acrylate, butyl acrylate, and 2-ethylhexyl acrylate; aralkyl methacrylate or acrylate such as benzyl methacrylate and benzyl acrylate; alkoxyalkyl methacrylate or acrylate such as butoxyethyl methacrylate and butoxyethyl acrylate; aminoalkyl methacrylate or acrylate such as N,N-dimethylaminoethyl methacrylate and N,N-dimethylaminoethyl acrylate; methacrylic acid ester or acrylic acid ester of polyalkylene glycol monoalkyl ethers such as diethylene glycol monoethyl ether, triethylene glycol monobutyl ether, and dipropylene glycol monomethyl ether; methacrylic acid ester or acrylic acid ester of polyalkylene glycol monoaryl ethers such as hexaethylene glycol monophenyl ether; isobornyl methacrylate or acrylate; glycerol methacrylate or acrylate; and 2-hydroxyethyl methacrylate or acrylate.

Examples of monomers having two or more photopolymerizable unsaturated bonds in a molecule include bisphenol A dimethacrylate, 1,4-butanediol dimethacrylate, 1,3-butylene glycol dimethacrylate, diethylene glycol dimethacrylate, glycerol dimethacrylate, neopentyl glycol dimethacrylate, polyethylene glycol dimethacrylate, polypropylene glycol dimethacrylate, tetraethylene glycol dimethacrylate, trimethylolpropane trimethacrylate, pentaerythritol trimethacrylate, pentaerythritol tetramethacrylate, dipentaerythritol tetramethacrylate, dipentaerythritol hexamethacrylate, dipentaerythritol pentamethacrylate, bisphenol A diacrylate, 1,4-butanediol diacrylate, 1,3-butylene glycol diacrylate, diethylene glycol diacrylate, glycerol diacrylate, neopentyl glycol diacrylate, polyethylene glycol diacrylate, polypropylene glycol diacrylate, tetraethylene glycol diacrylate, trimethylolpropane triacrylate, pentaerythritol triacrylate, pentaerythritol tetraacrylate, dipentaerythritol tetraacrylate, dipentaerythritol hexacrylate, and dipentaerythritol pentacrylate.

As the above-mentioned oligomer having photopolymerizable unsaturated bonds are employed those obtained by properly polymerization of the above-mentioned monomers.
These photopolymerizable compounds may be used alone or two or more of them may be used in combination.
The photopolymerization initiator to be added to the pigment-dispersed resist composition of the present invention is not particularly limited and may include, for example, benzophenone, N,N'-tetraethyl-4,4'-diaminobenzophenane, 4-methoxy-4'-dimethylaminobenzophenone, benzyl, 2,2-diethoxyacetophenone, benzoin, benzoin methyl ether, benzoin isobutyl ether, benzyl dimethyl ketal, α-hydroxyisobutylphenone, thioxanthone, 2-chlorothioxanthone, 1-hydroxycyclohexyl phenyl ketone, tert-butylanthraquinone, 1-chloroanthraquinone, 2,3-dichloroanthraquinone, 3-chloro-2-methylanthraquinone, 2-ethylanthraquinone, 1,4-naphthoquinone, 1,2-benzoanthraquinone, 1,4-dimethylanthraquinone, 2-phenylanthraquinone, and triazine photopolymerization initiators. They may be used alone or two or more of them may be used in combination.

The solvent to be added to the pigment-dispersed resist composition of the present invention may be same as the dispersion medium to be used for preparation of the above-mentioned pigment dispersion composition and preferably ester organic solvents, ether organic solvents, ether ester organic solvents, ketone organic solvents, and nitrogen-containing organic solvents having a boiling point in a range of 100 to 220°C at a normal pressure (1.013 × 10² kPa). If a large quantity of a solvent having a boiling point exceeding 220°C is contained, the solvent is not sufficiently evaporated and remains in the dried coating film at the time of pre-baking of the coating film formed by application to possibly result in decrease of the heat resistance of the dried coating film. On the other hand, if a large quantity of a solvent having a boiling point lower than 100°C is contained, it becomes difficult to carry out uniform application and it possibly becomes impossible to obtain a coating film excellent in the surface smoothness.

Practical examples of such solvents include ether organic solvents such as ethylene glycol monomethyl ether, ethylene glycol monoethyl ether, ethylene glycol monoisopropyl ether, ethylene glycol monobutyl ether, diethylene glycol monomethyl ether, diethylene glycol monoethyl ether, propylene glycol monomethyl ether, propylene glycol monoethyl ether, propylene glycol monobutyl ether, diethylene glycol diethyl ether, diethylene glycol dimethyl ether, and diethylene glycol methyl ethyl ether; ether ester organic solvents such as ethylene glycol monomethyl ether acetate, ethylene glycol monoethyl ether acetate, ethylene glycol monobutyl ether acetate, propylene glycol monomethyl ether acetate, and propylene glycol monoethyl ether acetate; ketone organic solvents such as methyl isobutyl ketone, cyclohexanone, 2-heptanone, and δ-butyrolactone; ester organic solvents such as methyl 2-hydroxypropionate, ethyl 2-hydroxypropionate, ethyl 2-hydroxy-2-methylpropionate, 3-methyl-3-methoxybutyl propionate, methyl 3-methoxypropionate, ethyl 3-methoxypropionate, methyl 3-ethoxypropionate, ethyl 3-ethoxypropionate, ethyl ethoxyacetate, ethyl hydroxyacetate, and n-amyl formate; and nitrogen-containing organic solvents such as N-methylpyrrolidone, N,N-dimethylformamide, and N,N-dimethylacetamide. These organic solvents may be used alone or two or more of them in form of a mixture.
Among these organic solvents, in terms of the dissolution property, dispersibility, and coatability or the like, diethylene glycol dimethyl ether, diethylene glycol methyl ethyl ether, ethylene glycol monomethyl ether acetate, propylene glycol monomethyl ether acetate, propylene glycol monoethyl ether acetate, cyclohexanone, 2-heptanone, ethyl 2-hydroxypropionate, 3-methyl-3-methoxybutyl propionate, ethyl 3-methoxypropionate, methyl 3-ethoxypropionate, and n-amyl formate are preferable and propylene glycol monomethyl ether acetate is more preferable.

Further, in the case where two or more kinds of these solvents are used, in terms of the solubility of the above-mentioned alkali-soluble resin, dispersibility of the pigment, and coatability or the like, the amount of the solvents is preferably 50% by mass or more and more preferably 70% by mass or more in the entire solvents to be used in the pigment-dispersed resist composition.
In the pigment-dispersed resist composition of the present invention, various kinds of additives other than the above-mentioned ones such as a photopolymerizable compounds, a heat polymerization inhibitor, a ultraviolet absorbent, an antioxidant, or the like may be properly added, besides the above-mentioned components, based on the necessity.

A method for producing the pigment-dispersed resist composition of the present invention using the above-mentioned constituent materials may be a method for adding a photopolymerizable compound, a photopolymerization initiator, a film-formable resin, an organic solvent, and other additives based on the purpose to the pigment dispersion composition and stirring and mixing the mixture by using a stirring apparatus or the like, however the production method is one of preferable embodiments of the present invention and the present invention should not be limited by the method.

The method of the present invention makes it possible to obtain a treated pigment with a particle diameter smaller and more even than that of primary particles and in the case of using an organic pigment as the pigment, if the treated pigment is used for the pigment-dispersed resist composition for a color filter, the transparency and contrast ratio can be improved as compared with a conventional one.

### BRIEF DESCRIPTIONS OF THE DRAWINGS

Fig. 1 shows a partially cut front view of a vertical shaft type kneading apparatus to be used in the present invention.
Fig. 2 shows a plane view of a blade part of a vertical shaft type kneading apparatus to be used in the present invention.
Fig. 3 shows a magnified cross-sectional view of the driving shaft part of the vertical shaft type kneading apparatus to be used in the present invention.

### DESCRIPTION OF SYMBOLS

- 1: Vertical shaft type kneading apparatus
- 2: Tank
- 3: Agitation heads
- 6: Driving shaft
- 11: Supporting cylinder
- 14: Rotation plate
- 17: Agitation blade shaft
- 20: Planetary gears
- 22: Sun gears
- 23: Agitation blade

### BEST MODE FOR CARRYING OUT THE INVENTION

The present invention will be described more in detain with reference to Examples, however it is not intended that the present invention be limited to the described Examples. Unless otherwise specified, "%" means "% by mass" and "part(s)" means "parts by mass".

### <Treated organic pigment>

### (Example 1)

A tank of Trimix TX-15 (trade name: manufactured by INOUE MFG., INC.) was loaded with 750 parts by mass of Pigment Red 254, 7500 parts by mass of sodium chloride with a particle diameter of 20 µm, and 1800 parts by mass of diethylene glycol and the mixture was kneaded at 45°C for 3 hours in a range of 70% of a rated current value 9.3A to carry out salt milling. Next, 1300 parts by mass of the obtained kneaded mixture was added to 3 liters of hot water and stirred while being heated at 70°C for 1 hour to obtain a slurry and filtration and washing with water of the slurry were repeated to remove sodium chloride and diethylene glycol and successively, the resulting pigment was dried at 40°C for overnight to obtain 95 parts by mass of a pigment of Example 1.

### (Example 2)

A tank of Trimix TX-15 was loaded with 750 parts by mass of Pigment Blue 15: 6, 7500 parts by mass of sodium chloride with a particle diameter of 20 µm, and 1800 parts by mass of diethylene glycol and the mixture was kneaded at 45°C for 8 hours in a range of 70% of a rated current value 9.3A to carry out salt milling. Next, 1300 parts by mass of the obtained kneaded mixture was added to 3 liters of hot water and stirred while being heated at 70°C for 1 hour to obtain a slurry and filtration and washing with water of the slurry were repeated to remove sodium chloride and diethylene glycol and successively, the resulting pigment was dried at 40°C for overnight to obtain 95 parts by mass of a pigment of Example 2.

### (Comparative Example 1)

A tank of a kneader (trade name: KHD-2, manufactured by INOUE MFG., INC.) was loaded with 100 parts by mass of Pigment Red 254, 1000 parts by mass of sodium chloride with a particle diameter of 20 µm, and 240 parts by mass of diethylene glycol and the mixture was kneaded at 75°C for 10 hours to carry out salt milling. Next, 1300 parts by mass of the obtained kneaded mixture was added to 3 liters of hot water and stirred while being heated at 70°C for 1 hour to obtain a slurry and filtration and washing with water of the slurry were repeated to remove sodium chloride and diethylene glycol and successively, the resulting pigment was dried at 40°C for overnight to obtain 95 parts by mass of a pigment of Comparative Example 1.

### (Comparative Example 2)

A tank of a kneader (trade name: KHD-2, manufactured by INOUE MFG., INC.) was loaded with 100 parts by mass of Pigment Blue 15: 6, 1000 parts by mass of sodium chloride with a particle diameter of 20 µm, and 240 parts by mass of diethylene glycol and the mixture was kneaded at 75°C for 10 hours to carry out salt milling. Next, 1300 parts by mass of the obtained kneaded mixture was added to 3 liters of hot water and stirred while being heated at 70°C for 1 hour to obtain a slurry and filtration and washing with water of the slurry were repeated to remove sodium chloride and diethylene glycol and successively, the resulting pigment was dried at 40°C for overnight to obtain 95 parts by mass of a pigment of Comparative Example 2.

### (Examples 3, 4, and Comparative Examples 3 to 6)

### <Pigment dispersion composition>

Compositions shown in Table 1 were kneaded at a temperature of 60°C overnight by a bead mill to obtain pigment dispersion compositions of Examples 3, 4, and Comparative Examples 3 to 6. In Table 1, "PR254", "PB 15:6" indicate untreated pigments which were not salt milled.
The unit of the numeral values showing the compositions is "parts by mass".

### (Examples 5, 6, and Comparative Examples 7 to 10)

### <Pigment-dispersed resist composition for color filter>

After the pigment dispersion compositions of Examples 3, 4, and Comparative Examples 3 to 6 and other materials were mixed evenly to give the compositions shown in Table 2 by a high speed stirring apparatus, filtration with a filter having a pore diameter of 3 µm was carried out to obtain pigment-dispersed resist compositions of Examples 5, 6, and Comparative Examples 7 to 10. The unit of the numeral values showing the compositions is "parts by mass".

### <Evaluation>

### (Particle size distribution of treated organic pigment in pigment dispersion composition)

The pigment dispersion compositions of Examples 3, 4, and Comparative Examples 3 to 6 were diluted with propylene glycol monomethyl ether acetate and the particle size distribution of each composition was measured using a Microtrac particle size measurement apparatus (UPA 150, 9230 UPA; manufactured by LEED & NORTHRUP COMPANY). The results are shown in Table 1. In Table 1, "d10", "d50", and "d90" respectively show the particle diameters of 10%, 50%, and 90% integrated weight.

### (Contrast of pigment-dispersed resist composition)

Each of the pigment-dispersed resist compositions of Examples 5, 6, and Comparative Examples 7 to 10 was applied in a 1 µm thickness to a glass substrate using a spin coater and pre-baked at 100°C for 3 minutes and successively exposed by a high pressure mercury lamp and further post-baked at 230°C for 30 minutes. The contract of obtained each resist was measured by a chromaticity brightness meter BM-5A (trade name, manufactured by TOPCON CORPORATION). The results are shown in Table 2.

**[Table 1]**

| | Example 3 | Comparative Example 3 | Comparative Example 4 | Example 4 | Comparative Example 5 | Comparative Example 6 |
|---|---|---|---|---|---|---|
| Pigment of Example 1 (PR254) | 12.0 | - | - | - | - | - |
| Pigment of Comparative Example 1 (PR254) | - | 12.0 | - | - | - | - |
| PR254 | - | - | 12.0 | - | - | - |
| Pigment of Example 2(PB15:6) | - | - | - | 12.0 | - | - |
| Pigment of Comparative Example 2(PB15:6) | - | - | - | - | 12.0 | - |
| PB 15:6 | - | - | - | - | - | 12.0 |
| PB-821 | 3.6 | 3.6 | 3.6 | 4.8 | 4.8 | 4.8 |
| BMA/MAA copolymer | 4.8 | 4.8 | 4.8 | 1.2 | 1.2 | 1.2 |
| PGMEA | 79.6 | 79.6 | 79.6 | 82.0 | 82.0 | 82.0 |
| Total | 100.0 | 100.0 | 100.0 | 100.0 | 100.0 | 140.0 |
| (Particle size distribution) | | | | | | |
| d10(nm) | 27 | 30 | 60 | 27 | 32 | 65 |
| d50(nm) | 48 | 55 | 102 | 48 | 58 | 158 |
| d90(nm) | 102 | 113 | 220 | 113 | 125 | 283 |

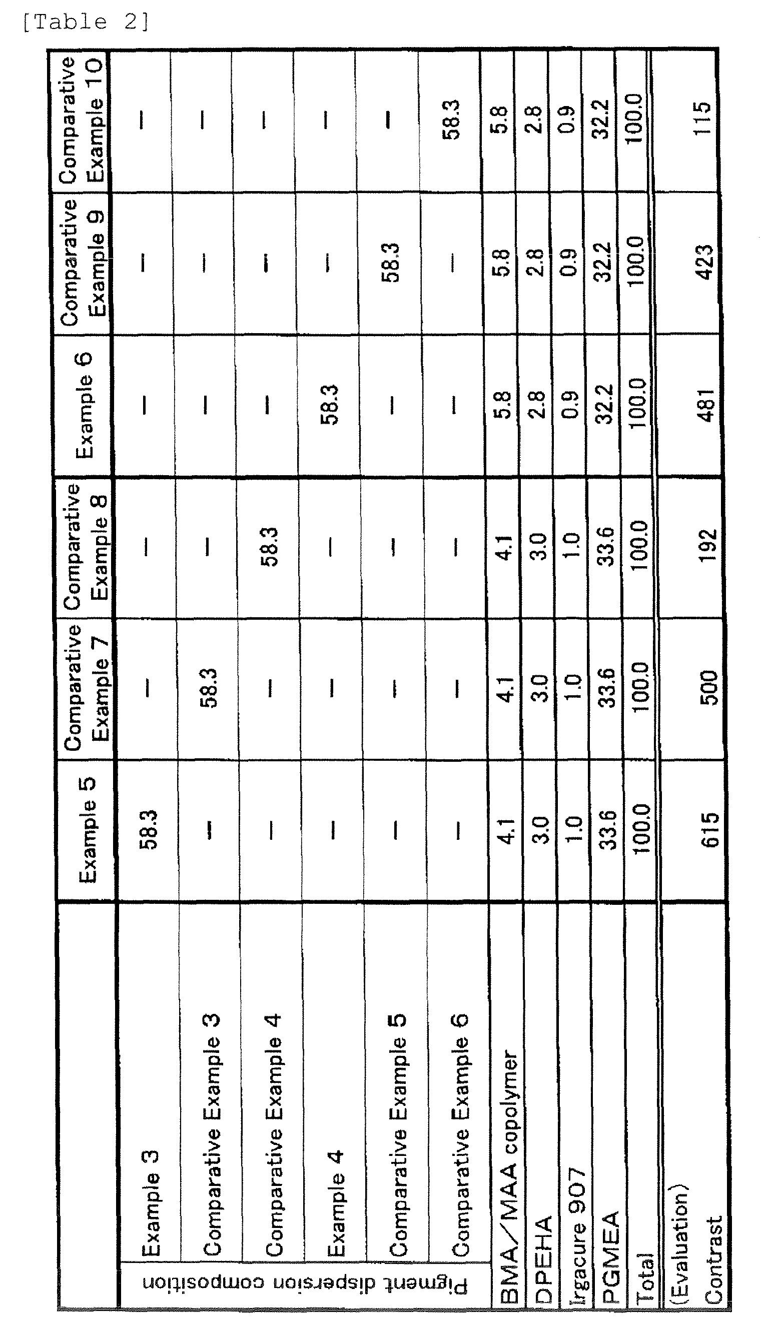

In the above Tables 1 and 2, "BMA/MAA copolymer" means benzyl methacrylate/methacrylic acid copolymer and "PGMEA" means propylene glycol monomethyl ether acetate.
In Table 1, "PR 254" shows Pigment Red 254: "PB 15: 6" shows Pigment Blue 15:6: and "PB-821" shows a pigment dispersant manufactured by Ajinomoto Co., Inc.
In Table 2 "DPEHA" means dipentaerythritol hexaacrylate and "Irgacure 907" is a trade name of 2-methyl-1[4-(methylthio)phenyl]-2-morpholinopropan-1-one manufactured by Ciba Specialty Chemicals Inc.

## Claims

1. A treated pigment obtained by grinding down a pigment by friction with an inorganic salt using a kneading apparatus having three agitation blades respectively made movable in an autorotation manner and simultaneously in a revolution manner.

2. A production method of a treated pigment comprising
loading a pigment, an inorganic salt, a dispersion medium substantially incapable of dissolving said inorganic salt into a tank,
kneading the mixture with a kneading apparatus having three agitation blades respectively made movable in an
autorotation manner and simultaneously in a revolution manner, and successively
removing said inorganic salt and said dispersion medium.

3. The production method of a treated pigment according to claim 2,
wherein said inorganic salt is a water-soluble inorganic salt and said dispersion medium is a water-soluble organic solvent and
said water-soluble inorganic salt and said water-soluble organic solvent are removed by washing with water after kneading treatment.

4. The production method of a treated pigment according to claim 2 or 3,
wherein as said kneading apparatus is employed a vertical shaft type kneading apparatus composed by
installing a supporting cylinder in a agitation head, inserting an driving shaft into the supporting cylinder, fixing a rotation plate in the driving shaft, journaling three agitation blade shafts in the rotation plate while positioning them at the respective apexes of an equilateral triangle in a plane view and surrounding said driving shaft,
installing planetary gears at the tip ends of the agitation blade shafts,
engaging the planetary gears with sun gears supported by the supporting cylinder,
installing agitation blades each having a diameter close to the inner wall of the tank in one side and extended to the center of the tank in the other side and set in the lower ends of said respective agitation blade shafts, and
forming a column body in the center of the tank to which said agitation blades are moved adjacently.

5. A pigment dispersion composition containing the treated pigment according to claim 1, a pigment dispersant, and a dispersion medium.

6. A pigment-dispersed resist composition for a color filter containing the pigment dispersion composition according to claim 5.
